# EUROPEAN PATENT APPLICATION

(11) **EP 2 166 725 A1**
(43) Date of publication of application: **24.03.2010**
(21) Application number: 08290818.7
(22) Date of filing: 28.08.2008
(51) Int. Cl.: H04L 29/06

(54) **Control of delivery of digital content, and an apparatus therefor**

(71) Applicant: Alcatel Lucent, 75008 Paris (FR)
(72) Inventor: Kisel, Andrey, Maidenhead SL8 8DH Berkshire (GB); Robinson, Dave Cecil, Aldbourne SN8 2NP Wiltshire (GB); Schutte, Tiaan, Voorschoten 2252 BV (NL)
(74) Representative: Sarup, David Alexander

(57) **Abstract**

A method is provided of controlling delivery of digital content to a user terminal in a network. The digital content is at least one of video data and audio data. The network comprises a central controller connected to access points. Each of the access points is for access by respective multiple user terminals. The method comprises the following steps. In one of said access points a watermark is detected in content to be delivered to a user terminal via said access point. Information of said watermark is sent to the central controller. The central controller controls said delivery of said content dependent upon the watermark detected.

## Description

### Field of the Invention

The present invention relates to telecommunications, in particular to delivery of digital content.

### Description of the Related Art

There is currently a fast expansion in the sharing of digital media data, such as video and audio, often referred to as content or digital content, over open networks such as the Internet. Content sharing applications also occur increasingly over closed Internet Protocol networks. This content sharing presents service providers and network operators, as well as owners of the content, with the challenge of identifying whether users are sharing content without the appropriate distribution rights or authorisation from content owners.

Often the content being shared is not encrypted, either because a copy has been made after decryption or because the content had not been encrypted before official distribution, for example by being broadcast over free-to-air channels.

There are various known approaches to detecting unauthorised copies of content, for example to prevent further distribution. One known approach is Digital Rights Management, DRM. Due to its complexity, DRM is not suitable for application to simple sharing of user-originated content.

Another known approach involves watermarking. Watermarking is where the content is marked with a digital signature, called a watermark, that is not normally apparent to the user of that content. Watermarking is typically done by the content owner, but may be done by a user terminal to which the copy of the content is officially distributed. Typically, the watermark inserted by the content owner identifies that owner. On the other hand, the watermark applied by the user terminal usually identifies the user terminal who is official recipient of the copy of the content. For example, the watermark applied by the user terminal may include a unique identifier of the official recipient and a timestamp.

This known approach involving watermarking has disadvantages. Specifically, the user terminal inserts a watermark, so there is a risk of malicious attack at the user terminal. Specifically, such an attack could involve disabling insertion of the watermark or creating an untraceable copy prior to insertion of the watermark. Furthermore, blocking of unauthorised copies is complicated. This is because the user terminal must both access a database to correlate a detected watermark to access rights and also have control mechanisms installed to block copies.

Another known approach is to apply controls in web-content-sharing-servers that handle a high volume of content traffic. In this approach, particular properties of the content are determined in order to distinguish low quality amateur content, such as user -generated content, from high quality professional content. An example is variation of a video characteristic such as brightness in a somewhat-static special compilation of the images that the video content consists of. Users who upload large volumes of professional content are identified and so may then be further investigated.

This approach has the disadvantages that a high professional quality of content does not necessarily mean that copyright-based restrictions on copying apply. For example, wide redistribution of some high quality content, such as educational or promotional content, may be desired by some rights owners. In other words, there is no simple direct relationship between whether, from its quality, the origin of the content is considered professional or amateur, and its copyright-based restrictions.

### Summary of the Invention

The reader is referred to the appended independent claims. Some preferred features are laid out in the dependent claims.

An example of the present invention is a method of controlling delivery of digital content to a user terminal in a network. The digital content is video data and/or audio data. The network comprises a central controller connected to access points for respective multiple user terminals. The method comprises the following steps. In one of said access points a watermark is detected in content to be delivered to a user terminal via said access point. Information of said watermark is sent to the central controller. The central controller controls said delivery of said content dependent upon the watermark detected.

In preferred embodiments, details as to the associated copyright-based restrictions are determined in a straight-forward manner from the watermark. This contrasts with the prior art approach of detecting some suggestion of copyright from considering some secondary indicator such as brightness in a somewhat-static special compilation of images.

Some embodiments have advantages that watermarking by the user terminal is not required so there is less potential for a malicious attack undertaken at a user terminal.

In preferred embodiments, the rules to be applied to copyright material can be readily altered. If desired, unauthorised copying of copyright material can be prevented, a warning of copyright infringement sent, or a request sent informing the user to obtain a copyright licence.

### Brief Description of the Drawings

An embodiment of the present invention will now be described by way of example and with reference to the drawings, in which:
Figure 1 is a diagram illustrating a content providing system according to an embodiment of the invention, and
Figure 2 is a diagram illustrating an example of messaging in the system shown in Figure 1.

### Detailed Description

The example system and its components will first be described followed by an example of how the system operates.

### System

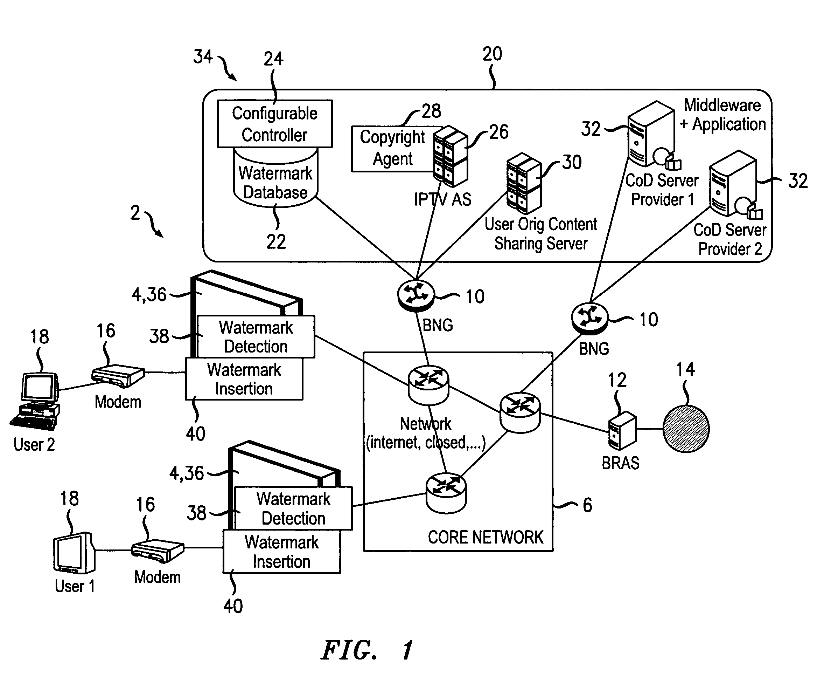

As shown in Figure 1, an example system 2, which is an Internet Protocol network, for example a Content-on-Demand network, consists of multiple access points 4, a core network 6 that includes routers 8, border network gateways (BNGs) 10, and a broadband remote access server (BRAS, 12) for internet connection to the internet world 14. The BNGs are switches. Each access point 4 is connected via a modem 16 to a user terminal 18.

The system 2 also includes a middleware-and-applications stage 20, which includes various entities, namely a watermark database 22 connected to a configurable controller 24, an IPTV application server 26 that hosts a copyright agent 28, a user-originated-content sharing server 30, and Content-on-Demand CoD servers 32. Middleware 34 refers in this example to the watermark database 22, configurable controller 24, and copyright agent 28. For the purpose of explanation, envisaging the system 2 as a somewhat hierarchical structure with a few content providing servers (user-originated-content sharing server 30, and Content-on-Demand CoD servers 32) at a high level and more user terminals 18 at a low level, then the watermark database 22, configurable controller 24 , and copyright agent 28 reside in a middle level and hence are denoted middleware 34.

The access points 4 are each connected to the core network 6. The various entities of the middleware-and-applications stage 20 are connected via various border network gateways (BNGs) 10 to the core network 6.

### Access Points

Each access point 4 includes a Digital Subscriber Line Access Multiplier (DSLAM) 36, a watermark detection agent 38 and a watermark insertion agent 40.

### Watermark detection agent and watermark insertion agent

A watermark is a digital signature or identifier applied to the content being transmitted. Watermarks indicate one or more properties of the content such as a unique content identifier, name of provider, identifier of copyright owner, and/or rights restrictions. Watermarks can indicate previous history such as to which user the content has been delivered and associated timestamps. Watermarks are usually hidden from the end user, as in this example, but need not be.

The watermark detection agent 38 has access to the watermark database 22 and configurable controller 24 located in the middleware-and-applications stage 20. Detected watermarks are passed via the core network 6 to the configurable controller 24 for determination how to handle that content.

The watermark insertion agent 40 acts to add a watermark to content streams as they are transmitted via the respective access point, for example in the form of an identifier of the user terminal that is to be official recipient and a time stamp.

### Configurable controller

The configurable controller 24 is a programmable controller, in the middleware, that determines handling of copyright protected content. For example, the controller 24 may control the copyright agent 28 to instruct the relevant access point to cut off transmission of the content, or allow the content to be transmitted together with a warning to the user that a license is required.

A set of rules for handling copyright protected content is defined in the controller 24. The controller 24 is configurable in that changes to these rules can be made.

One example of the rules is where the access points 4 report all cases of copyright content transmission and, in each case, the source of the content. The controller 24 records a number of "penalty" points for each instance of unauthorised transmission and selectably an expiration timestamp for that penalty. For example, for transmission of an unauthorised copy, the originating source user of the unauthorised copy may be penalised with a certain number of penalty points whilst a copying destination unit may receive a fraction of that certain number. The controller 24 then determines remedial actions based upon aggregated unexpired penalty points for each user; for example, suspending services and issuing a legal warning to the user who repeatedly created unauthorised copies, but merely issuing a legal warning to the user who received the unauthorised copies.

In some other embodiments, the controller 24 causes the access point 4 to block transmission of content, or reduce quality of service, QoS, of the transmission so as to reduce received content quality.

### Copyright Agent

The copyright agent 28 acts under instruction from the configurable controller 24 to periodically check whether content transmissions violate any copyright-based access control rights in respect of that content. The answers are reported to the configurable controller for use in determining how to handle of the content.

The copyright agent 28 also acts under the appropriate instruction from the configurable controller 24 to, for example, send, via the relevant access point 4, a notification to the user of their unauthorised activity and a request to stop. This notification may be e.g. to the television display screen of the user terminal 18. In some alternative embodiments this notification may be by other communication methods, such as Short Message Service (SMS) message, email or Instant Messenger.

### Operation

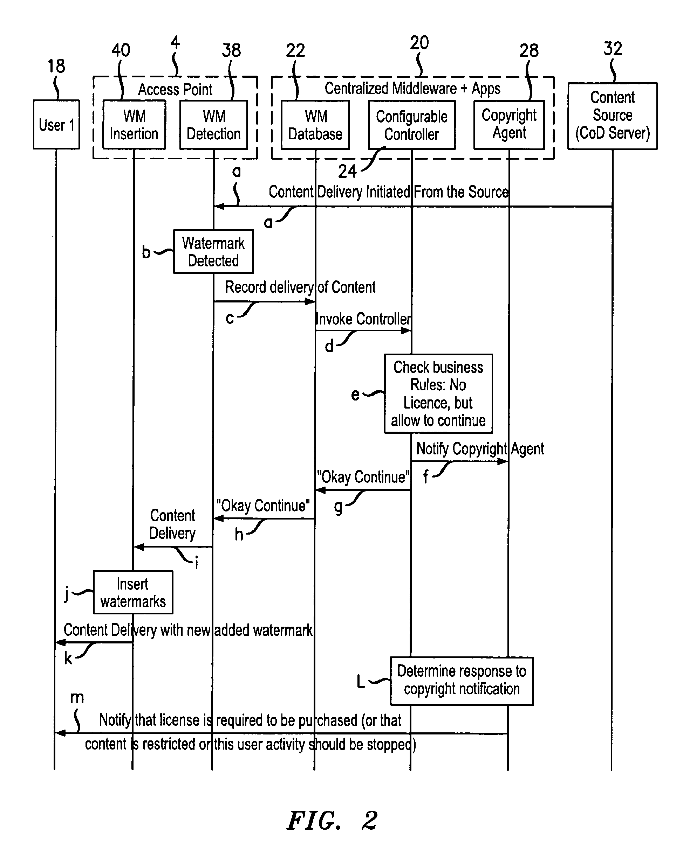

One example of how the system operates is now described with reference to Figure 2.

As shown in Figure 2, content is available in the content source, which is a CoD server 32 in this particular example but, may alternatively be the user-originated content sharing server 30 or the internet.

The delivery of content from the content source is initiated (step a) such that the content is passed to the water mark detection agent 38 of the access point 4 (via a BNG and the core network, not shown in Figure 2).

The watermark detection agent 38 detects (step b) a watermark indicative of a copyright owner in the received content.

A notice of delivery of content to the access point 4 and the associated watermark are then sent (step c) in the watermark database.

The database checks against its stored watermarks to identify the copyright owner and that information is then sent (step d) to the configurable controller 24 which uses that information to look up (step e) the applicable business rules. These can be considered as the rules for determining how to handle content dependent upon whether that content is copyright protected. In this example the rule applied to content with that water mark is to allow content delivery to continue even if there is no copyright licence.

As a next step, the controller 24 notifies (step f) the copyright agent 28 of the watermarked content.

The controller 24 then sends a message notifying (step g) the watermark database 22 that delivery of the content can continue. The message is then passed (step h) from the database 22 to the watermark detection stage 38 of the access point 4. The content is then passed (step i) from the watermark detection stage 38 to the watermark insertion stage 40 where a further watermark is inserted (step j) that identifies the user terminal for which this transmission of the content is specifically intended. The content including the new watermark is passed (step k) from the watermark insertion agent to the specified user terminal 18 ("User 1" in this example).

The copyright agent 28 performs (step *l*) a check as to whether that content includes copyright material including reporting the result to the controller 24, and the controller 24 instructs the copyright agent 28 to send an appropriate notification to the user terminal 18. In consequence, the copyright agent sends (step m) a notification via the access point to the user terminal 18 ("User 1 "). In this example the notification is that a licence should be purchased.

### Variants

In some other examples of operation, the notification might be that access to the content is restricted or that this user activity should be stopped. In some other examples, the access point may be instructed to cease further transmission of the content.

In an alternative to restrictions based on copyright protection, the content may merely be watermarked in order to apply usage restrictions, for example time of availability, such as one month from first release of the content. Another example is watermarking to restrict access to user terminals within certain geographical areas. Another example is watermarking to indicate a security classification, for example, of sensitive material, so as to then prevent access by unauthorised personnel.

In another example, the Copyright Agent runs periodic evaluations of reported user activity to determine usage. For example, for a user, reported instances of copying of watermarked content can be evaluated to determine a cost for each copy and then the user issued with a bill for the copied items. The cost of each copy is determined for the watermark database. For example copies of news programs can be free whilst movies can attract some charge.

In some embodiments, in access points, there is an intelligent subscriber access multiplayer (ISAM) or optical line terminal (OLT) in place of the DSLAM.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method of controlling delivery of digital content to a user terminal in a network comprising a central controller connected to access points, each of the access points being for access by multiple user terminals, the digital content comprising at least one of video data and audio data, the method comprising the steps of:
in one of said access points detecting a watermark in the digital content to be delivered to a user terminal via said access point;
sending information of said watermark to the central controller;
the central controller controlling said delivery of said content dependent upon the watermark detected.

2. A method according to claim 1, in which the central controller includes a database of known watermarks to which the detected watermark is compared so as to identify a copyright owner.

3. A method according to claim 1, in which the central controller includes a copyright agent which indicates whether delivering that content to a user terminal would constitute unauthorised copying of copyright content.

4. A method according to claim 1, in which the controller includes a record of delivery rules to be applied dependent upon the watermark detected.

5. A method according to claim 4, in which a rule is to deliver content with that watermark even if copying of copyright content is involved.

6. A method according to claim 4, in which a rule is to prohibit delivery to the user terminal of the copyright content having that watermark.

7. A method according to claim 5 or claim 6, in which the controller causes a message to be sent to the user terminal indicating that a copyright licence should be obtained.

8. A method according to claim 7, in which the controller causes a copyright agent to send the message to the user terminal via the access point to which the user terminal is connected.

9. A method according to claim 1, in which said controller comprises Internet Protocol television, IPTV, middleware between the access points and content supplying servers.

10. A method according to claim 1, in which the access point is operative to insert a further watermark into content for delivery to a user terminal.

11. A method according to claim 10, in which the further watermark includes an indication of identity of the user terminal which is intended recipient.

12. A method according to claim 1, in which the controller records deliveries of content and raises charges for users dependent upon said record.

13. A network for delivery of digital content to user terminals, the digital content comprising at least one of video data and audio data, the network comprising a central controller connected to access points for respective multiple user terminals;
at least one of said access points comprising a watermark detector configured to detect a watermark in digital content to be delivered to a user terminal via the access point;
the central controller being configured to receive information of said watermark and to control delivery of said content by said at least one of said access points dependent upon the watermark detected.

14. A network according to claim 13, in which said controller comprises Internet Protocol television, IPTV, middleware between the access points and content supplying servers.
